# EUROPEAN PATENT SPECIFICATION

(11) **EP 0 325 101 B1**
(45) Date of publication and mention of the grant of the patent: **24.03.1993**
(21) Application number: 89100041.6
(22) Date of filing: 03.01.1989
(51) Int. Cl.: G01N 35/02

(54) **Automatic chemical analytical apparatus**
Automatisches chemisches Analysegerät
Analyseur chimique automatique

(30) Priority: 22.01.1988 JP 12139/88
(43) Date of publication of application: 26.07.1989
(73) Proprietor: KABUSHIKI KAISHA TOSHIBA, Kawasaki-shi, Kanagawa-ken 210 (JP)
(72) Inventor: Yamagishi, Kazutoshi, Otawara-shi Tochigi-ken (JP); Yamashita, Kiyoshi, Otawara-shi Tochigi-ken (JP); Nakazato, Toshiaki, Otawara-shi Tochigi-ken (JP)
(74) Representative: Henkel, Feiler, Hänzel & Partner

(56) References cited:
- EP-A- 0 152 610
- EP-A- 0 223 002
- US-A- 3 814 582
- US-A- 3 917 455
- PATENT ABSTRACTS OF JAPAN, vol. 8, no. 248 (P-313)[1685], 14th November 1984;& JP-A-59 120 864
- PATENT ABSTRACTS OF JAPAN, vol. 7, no. 206 (P-222)[1351], 10th September 1983;& JP-A-58 102 160

## Description

### Background of the Invention

The present invention relates to an automatic chemical analytical apparatus wherein a desired reagent is reacted with samples and the state of its reaction is measured optically.

An automatic chemical analytical apparatus wherein serums of human beings are used as samples, a desired reagent is chemically reacted with the samples, and the state of its reaction is measured optically, so that the photometric data can be utilized for diagnosis is known.

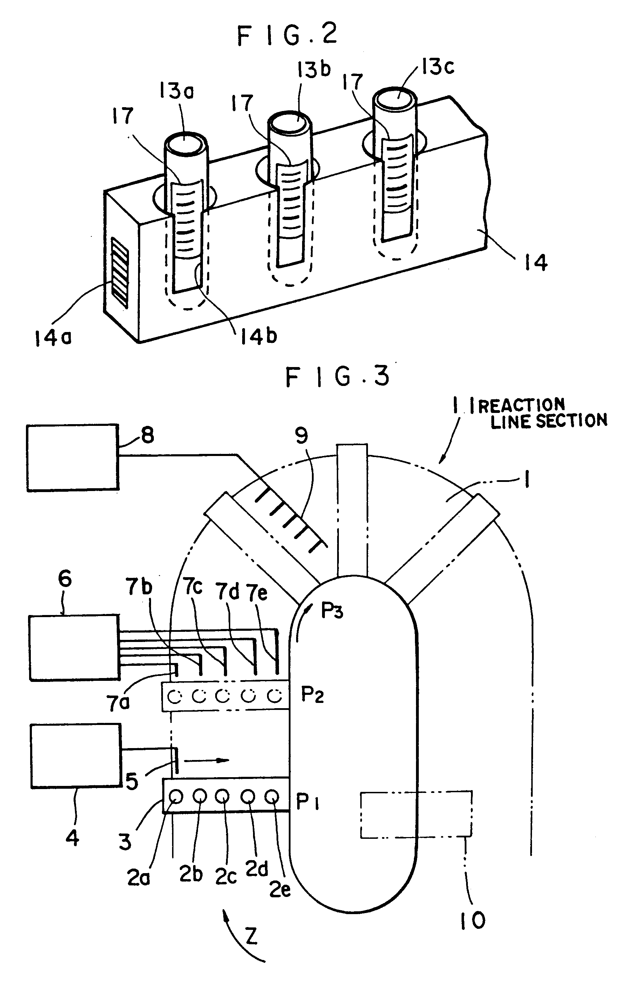

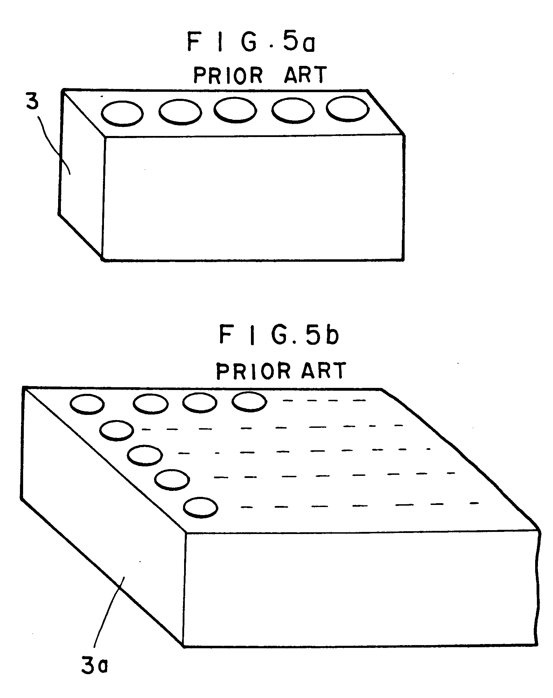

To carry out such a chemical analysis, a high-speed multi-item analyzing apparatus capable of processing, for example, 100 specimens (samples) or over per hour has recently made an appearance. In such an analyzing apparatus, the handling of the samples is generally carried out in such a manner that several sample tubes (also called cells) filled with the samples are contained in line in a sample rack 3 as shown in Fig. 5a, or a plurality of sample tubes are housed in a sample cassette 3a as shown in Fig. 5b for measurement. Fig. 3 shows an embodiment of the constitution of a reaction line section 11 of such an analyzing apparatus, and in an annular thermostatic chamber 1, a plurality of reaction cells 2 (2a, 2b, 2c....) are arranged to be contained in each of cell cassettes 3, and these cell cassettes 3 are rotated by a driving source (not shown) to be moved successively in th direction Z indicated by the arrow. The cell cassettes 3 are rotated at a certain cycle time including a stop period so that the reaction cells may be moved successively cycle by cycle.

At a positioned P₁ adjacent the outer circumference of the annular thermostatic chamber 1, a sample distributing mechanism 4 is situated, desirable sample tubes are contained in this mechanism 4, and by moving a nozzle 5 as necessary a sample can be distributed into an opposite reaction cell 2. At a position P₂, a reagent distributing mechanism 6 is positioned, desired reagent tubes are contained in this mechanism 6, and a desired reagent is distributed to the particular reaction cells 2 by nozzles 7 (7a, 7b, 7c....) as required. At a position P₃, a stirring mechanism 8 is positioned, and stirrers 9 perform stirring action of the reaction cells 2 positioned opposite thereto. The distribution and the stirring action mentioned above are carried out during the stop period of the cell cassette 3.

A photometric system 10 for optically measuring the state of the chemical reaction of the sample with the reagent in the reaction cell is situated in the path of the thermostatic chamber 1, and comprises lamps, detectors, etc. At the instant when the reaction cells that are being rotated pass across the light paths from the lamps to the detectors, the absorbances in the reaction cells are measured photometrically, and the photometric data are thus obtained.

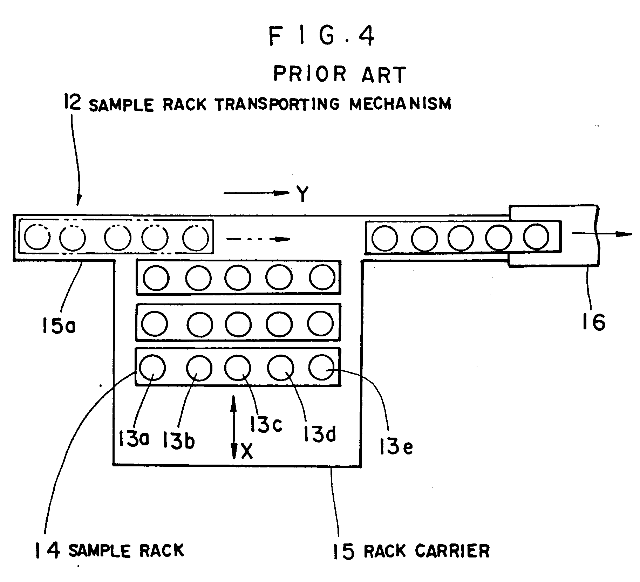

In the analyzing apparatus for carrying out chemical analysis of serum or the like as above, a sample rack transporting mechanism wherein previously collected samples are held and the samples are supplied to a reaction line section 11 as mentioned above when required is provided. In the sample rack transporting mechanism, as shown in Fig. 4, rectangular sample racks 14 each containing sample tubes 13 (13a, 13b, 13c....) that are filled with a prescribed amount of samples and are supplied from outside at a position 15a are arranged in a rack carrier 15 with them successively juxtaposed in the direction X, and they are transported forward one by one from the upper sample rack in the direction Y though a belt 16. When the sample rack 14 reaches a position adjacent to the reaction line section 11, the sample distributing nozzle 5 sucks a desired amount of a sample from a desired sample tube 13.

Such analyzing apparatus is for instance known from US-A-3 917 455

### Summary of the Invention

In the conventional automatic chemical analyzing apparatus, since the sample rack transporting mechanism 12 is constituted in such a way that the plurality of the rectangular sample racks 14 are juxtaposed in one direction, there is a problem that the handling operability of the sample racks was poor. That is, in the case wherein it is required to change the order of the measurement of the sample racks, it is very difficult to take out and insert the involved sample rack, and in the case wherein an urgent specimen is to be introduced, it is required that an urgent rack insertion position 15a is to be provided previously at an end of the rack carrier 15. Further, if an abnormal result is found in a sample whose measurement has been completed at the reaction line section 11, its recheck becomes necessary, but in that case, a sample rack 14 in which the same sample is prepared newly must be added to the rack carrier 15.

The present invention has been completed taking the above situation into consideration, and it is an object of the present invention to provide an automatic chemical analytical apparatus in which the handling and operability of sample racks are improved.

This object is solved by an automatic chemical analytical apparatus as claimed in claim 1
To attain the above object, in the present invention, a sample rack transporting mechanism is provided with a round rotating table, and a plurality of sample racks are arranged along the circumferential surface of the rotating table with the length of the sample racks approximately orthogonal to said circumferential surface.

In the present invention, as sample tubes, use is made of sample tubes having ID bar code labels stuck thereon, the sample racks themselves have ID bar code labels, a rack ID reader for reading the ID bar code of the sample rack is provided near the rotating table of the sample rack transporting mechanism, and a sample ID reader for reading the ID bar code on the sample tube is provided.

Further, in the present invention, operation switches for controlling the rotating table of the sample rack transporting mechanism are provided.

Since the round rotating table constitutes the sample rack transporting mechanism, and the sample racks are arranged along the circumferential surface of the rotating table, the takeout and
insertion of a sample rack at an arbitrary position around the rotating table can be carried out at will. By providing a sample ID reader for the sample tubes and the rack ID reader for the sample racks, the samples on the sample racks are identified, and amounts of samples required for measurement are taken out from the sample tubes, and the remaining parts of the samples are left on the sample racks, so that when its recheck becomes necessary, the particular sample can be taken out from the sample tube and can be measured again, enabling the recheck to be carried out automatically.

### Brief Explanation of the Drawings

Fig. 1 is a schematic block diagram showing an example of the present invention;
Fig. 2 is a schematic perspective view of a sample rack used in the present invention;
Fig. 3 is a plane view showing the constitution of a reaction line section;
Fig. 4 is a plane view showing a sample rack transporting mechanism of a conventional apparatus; and
Fig. 5a and 5b are schematic perspective views showing embodiments of conventional containers for containing sample tubes.

### Example

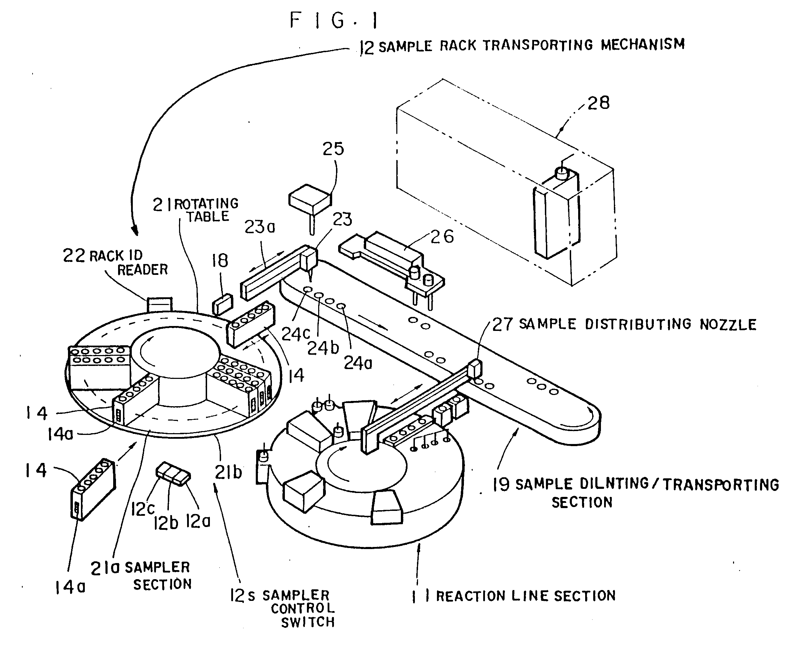

Fig. 1 is block diagram showing an example of the present invention that is made up of a sample rack transporting mechanism 12, a sample diluting/transporting line section 19, and a reaction line section 11.

The sample rack transporting mechanism 12 is equipped with a round rotating table 21, and a plurality of sample racks 14 are arranged on a flat sampler section 21a of the table 21 along a circumferential surface 21b. The sample rack 14 is in the shape of a rectangular parallelipiped, and a plurality of sample tubes 13a to 13c are held therein along the length of the sample rack 14. The sample racks 14 are arranged on the rotating table 21 with the length of the sample racks approximately orthogonal to the circumferential surface. A side surface of each sample rack 14 has a bar code label 14a attached thereto indicating the rack ID, and each sample tube 13 has a bar code label 17 attached thereto as shown in Fig. 2 indicating the specimen ID. A window section 14b is formed in a side of each sample rack 14 so that the label 17 can be seen. A rack ID reader 22 is situated in position of the circumference of the rotating table 21 for reading the bar code of the sample rack 14. The position of the rack ID reader 22 is not limited to the outer circumferential position of the rotating table 21, but can be situated in an inner circumferential position thereof. A sample ID reader 18 is situated in other position so that the sample racks 14 may be taken out temporarily from the rotating table 21 one by one and the bar code of each sample tube 13 may be read. Thus, after the sample rack 14 is taken out temporarily by a taking-out mechanism (not shown) only when the bar code is to be read, the sample rack 14 is returned in position of the rotating table 21 again. A sample distributing nozzle 23 movable outward along a guide rail 23a is situated in position of the circumference of the rotating table 21 so that a required amount of the particular sample which is necessary for measurement may be sucked from a desired sample tube 13 on the sample rack 14 and that sample may be distributed into each of diluting tubes of the sample diluting/transporting line section 19 described later. The sample rack transporting mechanism 12 is equipped with various operation switches 12s including a sampler control switch 12a, and a pose switch 12a, feed switch 12c, etc. that are not shown. Here, the sampler control switch 12a is for starting the analysis, the pose switch 12b is for stopping the rotating table, and the feed switch 12c is a switch for restarting the rotation of the rotating table.

The sample diluting/transporting line section 19 has a plurality of diluting tubes 24 (24a, 24b, 24c,....) that are moved independently periodically by a belt driving mechanism or the like, and the diluting tubes 24 can be transported in the direction shown by the arrow, which distributing tubes 24 hold the samples distributed from the sample tubes 13 by the sample distributing nozzle 23. The transporting line section 19 is equipped with a diluting mechanism 25 and a washing mechanism 26 in desired positions. The diluting mechanism 25 performs dilution in such a way that a desired amount of pure water is supplied to each of the diluting tubes 24 in accordance with the predetermined parameters as desired to dilute each sample from 0 times (factor 0) to desired times. Since each diluting tube 24 is used repeatedly for different samples, the washing mechansim 26 works to wash well each diluting tube 24 that has done measurement in order not to allow cross contamination or the like to occur. The reaction line section 11 is situated near the sample diluting/transporting line section 19. Although in Fig. 1 only one such a reaction line section 11 is provided, if required, a plurality of such reaction line sections 11 may be provided. A sample distributing nozzle 27 that can be moved outward is situated in position near the sample diluting/transporting line section 19, and can suck a desired amount of the sample required for mesurement from the desired diluting tube 24 on the sample diluting/transporting line section 19 to distribute the particular sample to a reaction cell of the reaction line section 11 described later.

The reaction line section 11 is constructed, for example, similarly to a conventional embodiment shown in Fig. 3, and is a section wherein the sample suplied from the sample rack transporting mechanism 12 is actually analyzed chemically. Fig. 1 shows an embodiment comprising a round thermostatic chamber 1 whose basic constitution is similar to that comprising an oblong thermostatic chamber 1 shown in Fig. 3. A refrigerator 28 is near by wherein required materials such as reagents or the like are stored.

Now the operation of this Example will be described.

After the sample racks 14 on which the bar code labels 14 a are stuck and each of which contains several, for example five, sample tubes 13 that are filled with desired samples and have bar code labels 17 corresponding to the samples are arranged successively on the samples section 21a along the circumferential surface 21b of the rotating table 21 of the sample rack transporting mechanism 12, the sample control switch 12a is operated to start the analysis. Thus, the rotating table 21 is started to rotate clockwise, for example, according to the predetermined cycle time. Along with the rotation, the bar codes on the sample racks 14 moved to in front of the rack ID reader 22 are successively read. The ID of the sample rack includes the kind of the sample and the sample rack number. If, for example, the sample is detected to be a sample for calibration from the kind of the same rack, the calibration operation is first started. As kinds of the sample racks, for example, five kinds of sample racks --- a general sample rack, for samples, a sample rack for correction of blanks, a sample rack for standards, a sample rack for controls, and a sample rack for emergency --- are prepared. The positions on the rotating table 21 where the sample racks are to be arranged can be specified previously at definite positions.

When the moved sample rack 14 has reached opposite to the sample ID reader 18, the sample rack 14 is taken out temporarily from the rotating table 21 by the taking-out mechanism (not shown) outward orthogonally to the circumferential surface 21b, and the bar codes on the sample tubes 13 held therein are successively read. When the reading is completed, the sample rack 14 is returned to the original position of the rotating table 21 again. Such a takeout operation of the sample rack 14 is performed during a stop period of the cycle time. By reading the ID on the sample tube 13, the items for measurement (work order) of the particular sample can be detected. Then, by moving the sample distributing nozzle 23, a desired amount of the desired sample necessary for measurement is sucked from the sample tube 13 whose ID has been read, and the sample is distributed into the diluting tube 24 of the sample diluting/transporting line section 19. When the distribution of the sample is effected, the major part of the sample in the original sample tube 13 remains in the sample rack 14.

The sample supplied to the diluting tube 24 of the sample diluting/transporting line section 19 is diluted desired times by the diluting mechanism 25 according to the predetermined parameters, and then is moved forward.

From the diluting tube 24 transported to a desired position, a required amount the desired sample is sucked by the movement of the sample distributing nozzle 27 and is distributed into the reaction cell 2 of the reaction line section 11. In this reaction line section 11, a reagent is distributed at a desired position as shown in Fig. 3 followed by stirring, and the state of the chemical reaction is measured by a photometric system 10 at a downstream position.

For some reason during the measuring operation as above, if it happens that there is a sample the measurement of which is required preferentially, or there is a sample the measurement of which is required urgently, by operating the pose switch 12b (not shown) provided for the sample rack transporting mechanism 12 at that time the rotation of the rotating table 21 is stopped. Thus, the sample rack 14 containing the involved sample is taken out and then is placed thereby changing its position, and then by operating the feed switch 12c, measurement can be effected easily with the order of the samples changed. In the case of an urgent sample, the sample rack 14 holding such an urgent sample is introduced with the rotating table 21 stopped, and similarly the measurement of the urgent sample can be effected easily. Thus if a sample rack is, for example, replaced or introduced, the starting position of the measurement is directed to the rotating table 21, the measurement can be carried out easily. Further, for some other reason if the sample rack is taken out in the middle of the operation, by operating the pose switch 12b, and the feed switch 12c, only a desired sample can be measured without affecting the others. Further, in the case as this example wherein the same racks 14 are arranged on the rotating table 21, since samples for controls are arranged with a certain interval between them and can be rotated in an endless manner, the measurement of the controls can be effected periodically and the controls can be used repeatedly.

If an abnormal result is found in a sample whose measurement has been completed at the reaction line section 11, this sample is required to be checked again. In that case, in this example, since not only the sample ID reader 18 but also the rack ID reader 22 are provided, and it can be recognized instantly which is the sample tube of the sample rack that contains the involved sample, the sample can be distributed from the involved sample tube on the rotating table 21 by effecting the required operation to check again the sample automatically and quickly. Further, in this case, by carrying out such an operation that the dilution factor at the sample diluting/transporting section 19 is varied, the recheck having an arbitrarily dilution factor can be carried out. Thus, by carrying out the dilution at the sample diluting/transporting line section 19, the amount of the sample can be made very small, and the range of the measurment (dynamic range) can be enlarged.

Further, by providing a suitable display apparatus so that the sample rack which is required to be checked again and the sample rack which is not required to be checked again are displayed, and the numbers, the position, etc. of these sample racks can be recognized, the sample rack and therefore the sample that is required to be checked again can be grasped, and the unrequired sample rack can be removed at any time.

## Claims

1. An automatic chemical analytical apparatus comprising:
a plurality of sample racks (14) each accommodating a plurality of sample tubes (13) filled with samples in a row;
a sample rack transporting mechanism (12) for holding said plurality of sample racks (14), and having a function for transporting said sample racks (14);
a sample diluting/transporting mechanism (19) having a plurality of diluting tubes (24) which distributes the sample in said sample tubes (13) for dilution, and for transporting said tubes (24); and
a reaction mechanism (11) having a plurality of reaction tubes and for leading said reaction tubes to a photometric section, said reaction tubes containing mixture of a reagent and the diluted sample distributed from said diluting tubes (24);
characterized in that
said sample rack transporting mechanism (12) is enquipped with a round rotating table (21) and the plurality of the sample racks (14) are arranged along the circumferential surface of said rotating table (21) with the length of the sample racks substantially orthogonal to the circumferential surface.

2. An automatic chemical analytical apparatus as claimed in claim 1, characterized in that said sample racks (14) are in the shape of a rectangular parallelepiped, and each hold a plurality of sample tubes (13) each having a bar code label (17) that are arranged longitudinally in said sample rack in respective sample holding sections, and a wall of each of said sample holding sections of said sample racks (14) is formed with a window (14b) for allowing one to view the bar code label (17) of said sample tube (13), and a side surface of each of said sample holding sections has a bar code label (14a) stuck thereto indicating an ID code.

3. An automatic chemical analytical apparatus as claimed in claim 2, characterized in that an ID reader (22) for reading the bar code of said sample rack (14) is provided near said rotating table (21).

4. An automatic chemical analytical apparatus as claimed in claim 3, characterized in that a sample ID reader (18) for reading the bar code of said sample tube (13) is situated near said rotating table (21) and downstream of said rack ID reader.

5. An automatic chemical analytical apparatus as claimed in claim 1, characterized in that said sample rack transporting mechanism (12) is provided with operation switches (12a-12c) for controlling the rotation and stop of the rotating table (21).

## Patentansprüche

1. Automatisches chemisches Analysegerät, umfassend:
eine Anzahl von Probengestellen (14), die jeweils eine Anzahl von mit Proben gefüllten Probenröhrchen (13) in einer Reihe aufnehmen,
einen Probengestell-Transportmechanismus (12) zum Halten der mehreren Probengestelle (14) und mit einer Funktion zum Transportieren der Probengestelle (14),
einen Probenverdünnungs/Transportmechanismus (19) mit einer Anzahl von Verdünnungsröhrchen (24), welcher die Probe(n) in den Probenröhrchen (13) für Verdünnung verteilt und zum Transportieren der Röhrchen (24) dient, und
einen eine Anzahl von Reaktions- oder Umsetzröhrchen aufweisenden Umsetzmechanismus (11) zum Überführen der Umsetzröhrchen zu einem photometrischen Abschnitt, wobei die Umsetzröhrchen ein Gemisch aus einem Reagenz und der von den Verdünnungsröhrchen (24) verteilten verdünnten Probe enthalten,
dadurch gekennzeichnet, daß
der Probengestell-Transportmechanismus (12) mit einem runden Drehtisch (21) ausgestattet ist und die mehreren Probengestelle (14) längs der Umfangsfläche des Drehtisches (21) mit im wesentlichen orthogonal zur Umfangsfläche liegender Länge der Probengestelle angeordnet sind.

2. Automatisches chemisches Analysegerät nach Anspruch 1, dadurch gekennzeichnet, daß die Probengestelle (14) in Form eines rechteckigen Parallelpipedons oder Quaders vorliegen und jeweils eine Anzahl von Probenröhrchen (13) mit jeweils einem Balkencodeetikett oder -aufkleber (17) halten, die in dem Probengestell in betreffenden Probenhalteteilen in Längsrichtung angeordnet sind, und eine Wand eines jeden der Probenhalteteile der Probengestelle (14) mit einem Fenster (14b) zur Ermöglichung einer Sichtbetrachtung des Balkencodeaufklebers (17) des Probenröhrchens (13) versehen ist, und an einer Seitenfläche jedes der Probenhalteteile ein einen Identifizierungs- oder ID-Code angebender Balkencodeaufkleber (14a) angeklebt ist.

3. Automatisches chemisches Analysegerät nach Anspruch 2, dadurch gekennzeichnet, daß in der Nähe des Drehtisches (21) ein ID-Leser (22) zum Lesen des Balkencodes des Probengestells (14) vorgesehen ist.

4. Automatisches chemisches Analysegerät nach Anspruch 3, dadurch gekennzeichnet, daß ein Proben-ID-Leser (18) zum Lesen des Balkencodes des Probenröhrchens (13) in der Nähe des Drehtisches (21) und stromab des Gestell-ID-Lesers angeordnet ist.

5. Automatisches chemisches Analysegerät nach Anspruch 1, dadurch gekennzeichnet, daß der Probengestell-Transportmechanismus (12) mit Bedienungs- oder Betätigungsschaltern (12a - 12c) zum Steuern der Drehung und des Anhaltens des Drehtisches (21) versehen ist.

## Revendications

1. Appareil automatique d'analyse chimique comportant :
- une pluralité de porte-échantillons (14) logeant chacun une pluralité d'éprouvettes (13) alignées remplies d'échantillons,
- un mécanisme (12) de transport de porte-échantillons pour maintenir ladite pluralité de porte-échantillons (14), et assurant la fonction de transport desdits porte-échantillons (14),
- un mécanisme (19) pour le transport et la dilution des échantillons qui comporte une pluralité de tubes de dilution (24) distribuant l'échantillon dans lesdites éprouvettes (13) pour les diluer, et qui sert à transporter lesdits tubes (24), et
- un mécanisme (11) pour la réaction qui comporte une pluralité de tubes de réaction et qui sert à conduire ces tubes de réaction à une partie photométrique, lesdits tubes de réaction contenant un mélange fait d'un réactant et de l'échantillon dilué distribué par lesdits tubes de dilution (24),
**caractérisé** en ce que ledit mécanisme (12) de transport des porte-échantillons est équipé d'une table ronde tournante (21) et la pluralité de porte-échantillons (14) est disposée le long de la surface de la circonférence de ladite table tournante (21) avec la longueur des porte-échantillons sensiblement perpendiculaire à la surface de la circonférence.

2. Appareil automatique d'analyse chimique selon la revendication 1, **caractérisé** en ce que lesdits porte-échantillons (14) ont la forme d'un parallélépipède rectangle, chacun soutient une pluralité d'éprouvettes (13) portant chacune une étiquette à code barre (17) qui sont disposées longitudinalement dans ledit porte-échantillon en des parties correspondantes de maintien des échantillons, une paroi de chacune desdites parties de maintien des échantillons du porte-échantillon (14) comporte une fenêtre (14b) pour permettre de voir l'étiquette à code barre (17) de ladite éprouvette (13), et une surface latérale de chacune desdites parties de maintien des échantillons comporte une étiquette à code barre (14a) qui y est collée et qui donne un code d'identification.

3. Appareil automatique d'analyse chimique selon la revendication 2, **caractérisé** en ce qu'un lecteur d'identification (22) destiné à lire le code barre dudit porte-échantillon (14) est placé à proximité de ladite table tournante (21).

4. Appareil automatique d'analyse chimique selon la revendication 3, **caractérisé** en ce qu'un lecteur d'identification d'échantillon (18), destiné à lire le code barre de ladite éprouvette (13), est placé à proximité de ladite table tournante (21) et en aval dudit lecteur d'identification de porte-échantillon.

5. Appareil automatique d'analyse chimique selon la revendication 1, **caractérisé** en ce que ledit mécanisme (12) de transport des porte-échantillons est pourvu de commutateurs d'actionnement (12a-12c) pour commander la rotation et l'arrêt de la table tournante (21).
